Europäisches Patentamt

European Patent Office

Office européen des brevets

(19)

(11) Veröffentlichungsnummer: **0 243 623**
**B1**

(12) **EUROPÄISCHE PATENTSCHRIFT**

(45) Veröffentlichungstag der Patentschrift: **19.12.90**

(51) Int. Cl.⁵: **B 23 K 9/02**, B 23 K 31/00

(21) Anmeldenummer: **87103246.2**

(22) Anmeldetag: **06.03.87**

(54) **Verfahren zum Befestigen von Rohren zwischen Rohrplatten.**

(30) Priorität: **26.04.86 DE 3614237**

(43) Veröffentlichungstag der Anmeldung:
**04.11.87 Patentblatt 87/45**

(45) Bekanntmachung des Hinweises auf die
Patenterteilung:
**19.12.90 Patentblatt 90/51**

(84) Benannte Vertragsstaaten:
**BE DE FR IT NL**

(56) Entgegenhaltungen:
**GB-A- 820 342**

**PATENT ABSTRACTS OF JAPAN, Band 3, Nr. 83
(C-52), 18. Juli 1979, Seite 32 C 52; & JP - A - 54
58642 (HITACHI SEISAKUCHO K.K.) 11.05.1979**

(73) Patentinhaber: **Balcke-Dürr AG
Homberger Strasse 2 Postfach 1240
D-4030 Ratingen 1 (DE)**

(72) Erfinder: **Krips, Herbert
Grabelohstrasse 176
D-4630 Bochum 7 (DE)**
Erfinder: **Podhorsky, Miroslan, Dr.
Elisabethstrasse 10a
D-4030 Ratingen 1 (DE)**

(74) Vertreter: **Patentanwälte Dipl.-Ing. Alex Stenger
Dipl.-Ing. Wolfram Watzke Dipl.-Ing. Heinz J.
Ring
Kaiser-Friedrich-Ring 70
D-4000 Düsseldorf 11 (DE)**

EP 0 243 623 B1

## Beschreibung

Die Erfindung betrifft ein Verfahren zum Befestigen von Rohren zwischen Rohrplatten von Wärmetauschern, die miteinander durch ein vorzugsweise starres Gehäuse verbunden sind, wobei die Rohre und/oder die Rohrplatten aus einem Stahl bestehen, der nach einem Schweißvorgang entspannend geglüht werden muß. Bei einer derartigen Wärmebehandlung von Wärmetauschern mit zwischen zwei Rohrscheiben verlaufenden Rohren lassen sich örtlich unterschiedliche Temperaturen nicht vermeiden, so daß auch bei sorgfältigster Ausführung der Wärmebehandlung Spannungen im Wärmetauscher verbleiben. Diese Spannungen beeinflussen besonders unangenehm die Vielzahl der die im Wärmetauscher aufzuheizenden oder abzukühlenden Medien trennenden Schweißnähte zwischen den Rohren und den Rohrplatten. Außerdem sind Reparaturen der bekannten Konstruktionen aufwendig, zeitraubend und teuer.

Zum Befestigen von Rohren zwischen Rohrplatten von Wärmetauschern wurden bisher die Rohrenden meistens unmittelbar mit den Rohrplatten verschweißt, wodurch es infolge des Materials der Rohre und/oder der Rohrplatten, das nach einem Schweißvorgang entspannend geglüht werden mußte, erforderlich war, den Wärmetauscher zumindest im Bereich der Schweißnähte einer Wärmebehandlung zu unterziehen, damit örtliche Spannungen und Aufhärtungen durch das Schweißen abgebaut werden. Es ist weiterhin bekannt, die Außenseite von Rohrplatten zur Herstellung von Wärmetauschern mit einer Plattierung zu versehen. Auch in diesem Fall müssen die Schweißnähte zwischen den Rohren und der Plattierung wärmebehandelt werden, wenn die Rohre aus einem Stahl bestehen, der nach einem Schweißvorgang zum Abbau örtlicher Spannungen und Aufhärtungen wärmebehandelt werden muß. Im letztgenannten Fall ist die Möglichkeit gegeben, im Reparaturfall ein oder mehrere Rohre zu verschließen, indem in die Plattierung ein Stopfen eingesetzt wird, der aus Plattierungsmaterial oder einem diesem Material gleichwertigen Material besteht. Da dieser Stopfen ausschließlich mit der Plattierung verschweißt wird, ist in diesem Reparaturfall keine nachfolgende Wärmebehandlung erforderlich. Die durch einen Stopfen verschlossenen Rohre nehmen allerdings nicht mehr am Wärmeaustausch teil.

Der Erfindung liegt die Aufgabe zugrunde, ein Verfahren zum Befestigen von Rohren zwischen Rohrplatten von Wärmetauschern zu schaffen, das eine verspannungsfreie Herstellung der Verbindung zwischen den Rohren und den Rohrplatten und eine einfache Reparatur ermöglicht, obwohl die Rohre und/oder die Rohrplatten aus einem Stahl bestehen, der nach einem Schweißvorgang entspannend geglüht werden muß.

Die Lösung dieser Aufgabenstellung durch die Erfindung ist dadurch gekennzeichnet, daß die Rohre mindestens an einem Ende durch Anschweißen eines Rohrstückes aus einem ohne Wärmebehandlung schweißbaren Material verlängert werden, daß an die Außenseite mindestens einer der beiden Rohrplatten die Bohrungen für die Rohre verlängernde Hülsen angeschweißt werden, die mindestens am freien Ende aus einem Material bestehen, das ohne Wärmebehandlung schweißbar ist, daß spätestens nach Durchführen aller eine Wärmebehandlung erfordernder Schweißvorgänge eine abschließende Wärmebehandlung durchgeführt wird, wobei die Rohre höchstens an einem Ende an der zugehörigen Rohrplatte befestigt sind, und daß die eingezogenen Rohre ausschließlich über die freien Enden der Verlängerungsrohrstücke und der Hülsen mittelbar mit der Rohrplatte verschweißt werden.

Durch das Verschweißen der Rohre und der Rohrplatten ausschließlich über die freien Enden der Verlängerungsrohrstücke und der Hülsen, deren Material keine anschließende Wärmebehandlung erfordert, entfällt die Notwendigkeit, den Wärmetauscher nach der Festlegung beider Rohrenden in den Rohrplatten nochmals einer Wärmebehandlung zu unterziehen, die zu unkontrollierten und unvermeidbaren Spannungen führen würde. Die vorher durchzuführende Wärmebehandlung der Schweißnähte zwischen den Rohren und den Verlängerungsrohrstücken einerseits und den Hülsen sowie den Rohrplatten andererseits kann einzeln oder gemeinsam im Verbund mit der Wärmebehandlung des gesamten Wärmetauschers durchgeführt werden, wobei im letztgenannten Fall höchstens ein Ende der Rohre an der zugehörigen Rohrplatte befestigt ist, so daß das andere Ende der Rohre sich während der Wärmebehandlung frei in den Bohrungen der anderen Rohrplatte ausdehnen kann. Hierdurch wird das Entstehen unkontrollierter Spannungen verhindert.

Die beim erfindungsgemäßen Verfahren herzustellenden Schweißnähte an den Rohren, Verlängerungsrohrstücken und Hülsen sind vollständig prüfbar und befinden sich in einem Bereich, der frei von Spannungen ist, die aus dem Betrieb des Wärmetauschers herrühren können. Schäden der Schweißnähte während des Betriebes sind somit nicht zu erwarten. Sollten Schäden an einem oder mehreren Rohren auftreten, lassen sich diese durch eine nach dem erfindungsgemäßen Verfahren ablaufende Reparatur oder durch einen Austausch einzelner Rohre ausführen, und zwar vor Ort und ohne die Notwendigkeit einer nachfolgenden Wärmebehandlung. Außerdem sind alle bei einer derartigen Reparatur herzustellenden Schweißnähte in vollem Umfang prüffähig.

Bei einer bevorzugten Weiterbildung des erfindungsgemäßen Verfahrens werden die Rohre zur Festlegung in den Rohrplatten in an sich bekannter Weise hydraulisch aufgeweitet, wobei eine hydraulische Aufweitung auch im Bereich der Verlängerungsrohrstücke bzw. der Hülsen stattfindet. Hierdurch wird ein zwischen den Verlängerungsrohrstücken und den Hülsen ggf. existierender Spalt verschlossen, so daß auch im Falle einer Undichtigkeit kein Medium zwischen die Verlängerungsrohrstücke und die Hülsen eindringen kann. Es wird auf diese Weise verhindert, daß beim Betrieb des Wärmetauschers in diesem Bereich Schäden oder Undichtigkeiten auftreten.

Das erfindungsgemäße Verfahren soll anhand einer zeichnerischen Darstellung erläutert werden. Es zeigt:

Fig. 1 einen Längsschnitt durch ein nach dem erfindungsgemäßen Verfahren zwischen zwei Rohrscheiben zu befestigendes Rohr vor Durchführung des eigentlichen Befestigungsvorganges aber nach Durchführen der vorbereitenden Arbeiten und

Fig. 2 einen entsprechenden Längsschnitt nach Abschluß des erfindungsgemäßen Verfahrens.

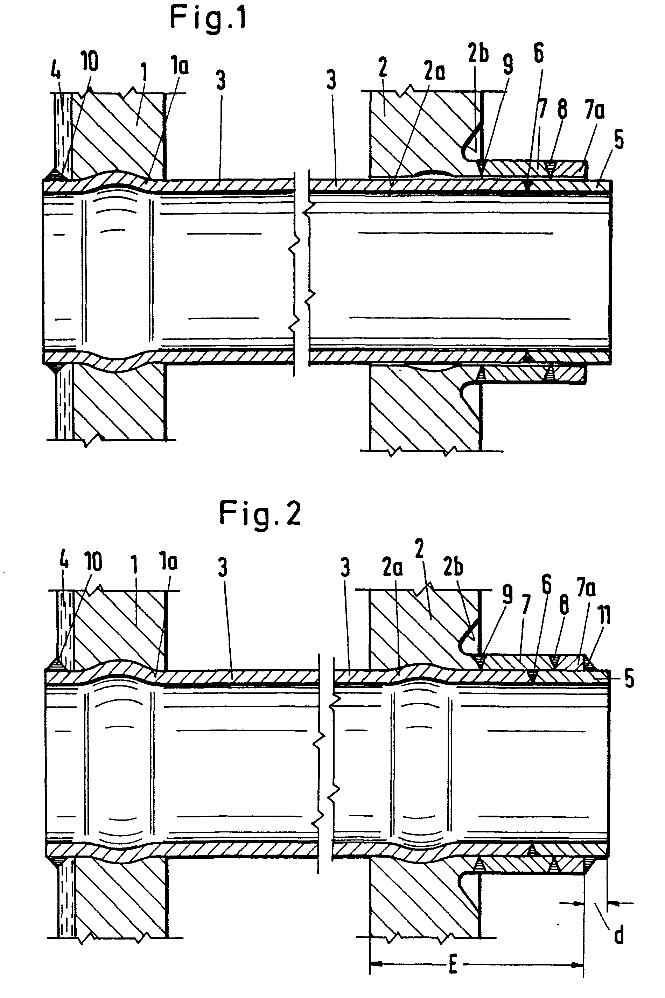

Die Zeichnung zeigt lediglich Teile zweier Rohrplatten 1 und 2, die mit Bohrungen 1a bzw. 2a versehen sind, in denen die Enden von geraden Rohren 3 befestigt werden. Ein derartiges Rohr 3 und Teile der zugehörigen Rohrplatten 1 und 2 sind in den Figuren 1 und 2 dargestellt. Insgesamt bilden die Rohrplatten 1 und 2 mit den Rohren 3 das Kernstück eines Wärmetauschers.

Ein derartiger Wärmetauscher dient zum Aufheizen bzw. zum Abkühlen eines Mediums, das entweder durch die Rohre 3 strömt oder die Rohre 3 von außen anströmt. Der Wärmeaustausch findet somit durch die Wände der Rohre 3 hindurch statt. Zu diesem Zweck ist das zwischen den Rohrscheiben 1 und 2 verlaufende Bündel der Rohre 3 von einem auf der Zeichnung nicht dargestellten Gehäuse umgeben, das die Rohrscheiben 1 und 2 miteinander verbindet.

Beim dargestellten Ausführungsbeispiel bestehen sowohl die Rohrplatten 1 und 2 als auch die Rohre 3 aus einem Stahl, der nach einem Schweißvorgang entspannend geglüht werden muß, um durch das Schweißen erzeugte örtliche Spannungen und Aufhärtungen abzubauen. Die Rohrplatte 1 ist auf ihrer Außenseite mit einer Plattierung 4 versehen, die aus einem Material besteht, das ohne anschließende Wärmebehandlung schweißbar ist, beispielsweise ein Edelstahl. Trotz dieser Materialeigenschaft der Plattierung 4 ist es notwendig, eine Wärmebehandlung durchzuführen, wenn die Enden der Rohre 3 mit der Plattierung 4 verschweißt worden sind, weil die Spannungen und Aufhärtungen im Rohr 3 durch eine solche Wärmebehandlung abgebaut werden müssen.

Bei dem in den Figuren 1 und 2 dargestellten Ausführungsbeispiel wird zuerst die Rohrplatte 1 mit der Plattierung 4 versehen. Anschließend werden beide Rohrplatten 1 und 2 gebohrt, um die miteinander fluchtenden Bohrungen 1a und 2a für den späteren Einzug der Rohre 3 herzustellen. Die gebohrten Rohrplatten 1 und 2 werden dann mit dem auf der Zeichnung nicht dargestellten Gehäuse versehen und auf diese Weise mehr oder weniger starr miteinander verbunden.

Nunmehr wird an jedes der Rohre 3 ein Verlängerungsrohrstück 5 angeschweißt, das ebenso wie die Plattierung 4 aus einem Material besteht, das ohne Wärmebehandlung schweißbar ist. Die hierbei ausgeführte Schweißnaht 6 wird anschließend geprüft.

Nunmehr werden Hülsen 7 hergestellt, deren Innendurchmesser geringfügig größer ist als der Außendurchmesser der mit den Verlängerungsrohrstücken 5 versehenen Rohre 3. Diese Hülsen 7 können insgesamt aus einem Material bestehen, das ohne Wärmebehandlung schweißbar ist. Beim Ausführungsbeispiel sind jedoch auch diese Hülsen 7 aus einem Stahl hergestellt, der nach dem Scheißen wärmebehandelt werden muß. In diesem Fall ist an die Hülsen 7 ein Verlängerungsstück 7a angeschweißt, das aus einem Material besteht, welches ohne Wärmebehandlung schweißbar ist. Die Schweißnaht 8 wird nach der Herstellung ebenfalls geprüft.

Nach dieser Vorbereitung sowohl der Rohre 3 als auch der Hülsen 7 erfolgt nunmehr ein Anschweißen der Hülsen 7 an die Außenseite der durch Ausdrehungen 2b vorbereiteten Rohrplatte 2. Auch die hierbei entstehende Schweißnaht 9 wird geprüft, bevor anschließend die Rohre 3 in die Bohrungen 1a und 2a der Rohrplatten 1 und 2 eingesetzt werden.

Beim Ausführungsbeispiel erfolgt jetzt die Befestigung jeweils eines Endes der Rohre 3 in der Rohrplatte 1 durch hydraulisches Aufweiten. Um den Sitz der Rohre 3 in der Rohrplatte 1 zu festigen, ist diese Rohrplatte 1 im Bereich ihrer Bohrungen 1a jeweils mit einer ausgerundeten Nut versehen, wie dies in der Zeichnung zu erkennen ist. Nach dem hydraulischen Aufweiten der Rohrenden innerhalb der Rohrplatte 1 erfolgt schließlich ein Verschweißen dieses Rohrendes mit der plattierung 4. Auch die hierbei entstehendende Schweißnaht 10 wird anschließend geprüft.

Da sämtliche bisher hergestellte Schweißnähte 6, 8, 9 und 10 zumindest teilweise ein Material betreffen, das nach einem Schweißvorgang entspannend geglüht werden muß, erfolgt nunmehr eine Wärmebehandlung des gesamten Bauteils, das aus den beiden durch das Gehäuse miteinander verbundenen Rohrplatten 1 und 2 und den an einem Ende, nämlich in der Rohrplatte 1 befestigten Rohren 3 besteht. Während dieser Wärmebehandlung können sich die mit den Verlängerungsrohrstücken 5 versehenen Enden der Rohre 3 frei innerhalb der Bohrungen 2a in der Rohrplatte 2 bewegen, weil sie an diesem Ende noch nicht mit der Rohrplatte 2 verbunden sind. Durch unterschiedliche Temperaturen auftretende Längenveränderungen führen deshalb nicht zu Spannungen innerhalb der Rohre 3 bzw. in den Rohrplatten 1 und 2. Auf diese Weise wird insbesondere vermieden, daß in die zuvor hergestellten Schweißnähte 6, 8, 9 und 10 Spannungen eingeleitet werden, die zu Beschädigungen dieser Schweißnähte führen können. Die Wärmebehandlung des gesamten Bauteils ist deshalb verhältnismäßig einfach und problemlos durchzuführen.

Nach Abschluß der Wärmebehandlung ergibt sich die in den Fig. 1 dargestellte Situation. Nunmehr werden die bisher freien Enden der Rohre 3 im Bereich der Rohrplatte 2 hydraulisch aufgeweitet. Danach werden die bisher freien Enden der Rohre 3 an die beim Ausführungsbeispiel ebenfalls mit ausgerundeten Nuten versehenen Bohrungen 2a der Rohrplatte 2 angelegt, wie dies im rechten Teil der Fig. 2 dargestellt ist. Bei diesem Ausführungsbeispiel erfolgt das hydraulische Aufweiten auch im Bereich der Hülsen 7 und der Verlängerungsstücke 7a, so daß der zuvor zwischen dem aus der Rohrplatte 2 herausragenden Teil der Rohre 3 und der mit dem Verlängerungsstück 7a versehenen Hülse 7 bestehende Spalt (siehe Fig. 1) beseitigt wird. Auch diese Spaltbeseitigung geht aus Fig. 2 hervor, in der der Bereich des hydraulischen Aufweitens durch den Buchstaben E gekennzeichnet ist. Die nunmehr an beiden Enden an den Rohrplatten 1 und 2 befestigten Rohre 3 werden abschließend im Bereich ihres Verlängerungsrohrstückes 5 mit den Verlängerungsstück 7a der zugehörigen Hülse 7 verschweißt. Die hierbei entstehende Schweißnaht 11 muß nicht wärmebehandelt werden, da sowohl die Verlängerungsrohrstücke 5 als auch die Verlängerungen 7a aus einem Material bestehen, das ohne Wärmebehandlung schweißbar ist. Sowohl die Festlegung der nach der Wärmebehandlung freien Rohrenden an der Rohrplatte 2 durch hydraulisches Aufweiten als auch die anschließende, über die Hülsen 7 mittelbar erfolgende Verschweißung der Rohre mit der Rohrplatte 2 erfordert somit keine nachfolgende Wärmebehandlung, die zu Spannungen innerhalb des fertigen Bauteils führen würde. Außerdem kann die frei zugängliche Schweißnaht 11 ohne Schwierigkeiten geprüft werden, bevor eine Druckprobe des nunmehr fertigen Bauteils erfolgt.

Sollte bei dem nach dem voranstehend beschriebenen Verfahren hergestellten Wärmetauscher während des Betriebes ein Rohr 3 beschädigt werden, ist es ohne Schwierigkeiten möglich, dieses Rohr 3 zu verschließen. Zu diesem Zweck kann ein Stopfen in das Verlängerungsrohrstück 5 eingesetzt und mit diesem verschweißt werden, der ebenfalls aus ohne Wärmebehandlung schweißbarem Material besteht. Am anderen Ende erfolgt ein Abdecken der Rohrmündung durch einen Deckel aus ohne Wärmebehandlung schweißbarem Material, der mit der Plattierung 4 verschweißt wird. In beiden Fällen ist keine anschließende Wärmebehandlung notwendig.

Eine Reparatur ist jedoch nicht nur durch Verschließen des jeweils defekten Rohres 3 möglich, sondern auch durch Einziehen eines neuen Rohres. Dieses ist dann an beiden Enden mit einem Verlängerungsrohrstück 5 aus ohne Wärmebehandlung schweißbarem Material versehen, so daß die Rohrenden ohne anschließende Wärmebehandlung sowohl mit dem Verlängerungsstück 7a der Hülse 7 als auch mit der Plattierung 4 verschweißt werden können. Sollte die Naht 11 undicht sein, braucht nur eine erneute Verbindungsschweißung durchgeführt zu werden. Auch hier ist keine Wärmebehandlung erforderlich.

Bezugszeichenliste:
1 Rohrplatte
1a Bohrung
2 Rohrplatte
2a Bohrung
2b Ausdrehung
3 Rohr
4 Plattierung
5 Verlängerungsrohrstück
6 Schweißnaht
7 Hülse
7a Verlängerungsstück
8 Schweißnaht
9 Schweißnaht
10 Schweißnaht
11 Schweißnaht
E Aufweitbereit
d Längendifferenz

## Patentansprüche

1. Verfahren zum Befestigen von Rohren (3) zwischen Rohrplatten (1, 2) von Wärmetauschern, die miteinander durch ein vorzugsweise starres Gehäuse verbunden sind, wobei die Rohre (3) und/oder die Rohrplatten (1, 2) aus einem Stahl bestehen, der nach einem Schweißvorgang entspannend geglüht werden muß, dadurch gekennzeichnet, daß die Rohre (3) mindestens an einem Ende durch Anschweißen eines Rohrstückes (5) aus einem ohne Wärmebehandlung schweißbaren Material verlängert werden, daß an die Außenseite mindestens einer der beiden Rohrplatten (2) die Bohrungen (2a) für die Rohre (3) verlängernde Hülsen (7) angeschweißt werden, die mindestens am freien Ende aus einem Material bestehen, das ohne Wärmebehandlung schweißbar ist, daß spätestens nach Durchführen aller eine Wärmebehandlung erfordernder Schweißvorgänge eine abschließende Wärmebehandlung durchgeführt wird, wobei die Rohre (3) höchstens an einem Ende an der zugehörigen Rohrplatte (1) befestigt sind, und daß die eingezogenen Rohre (3) ausschließlich über die freien Enden der Verlängerungsrohrstücke (5) und der Hülsen (7, 7a) mittelbar mit der Rohrplatte (2) verschweißt werden.

2. Verfahren nach Anspruch 1, dadurch gekennzeichnet, daß die Rohre (3) zur Festlegung in den Rohrplatten (1, 2) in an sich bekannter Weise hydraulisch aufgeweitet werden und daß eine hydraulische Aufweitung auch im Bereich (E) der Verlängerungsrohrstücke (5) bzw. der Hülsen (7, 7a) stattfindet.

## Revendications

1. Procédé de fixation de tubes (3) entre les plaques à tubes (1, 2) d'échangeurs de chaleur, qui sont reliées entre-elles au moyen d'un carter, de préférence rigide, les tubes (3) et/ou les plaques à tubes (1, 2) étant constitués d'un acier qui, après une opération de soudage doit subir un recuit de stabilisation, caractérisé en ce que les tubes (3) sont prolongés, à au moins une extrémité, par soudage d'un tronçon de tube (5) en un matériau soudable sans traitement thermique, en ce que sur le côté extérieur d'au moins une des deux plaques à tubes (2), sont soudées des douilles (7) prolongeant les alésages (2a) pour les tubes (3), ces douilles (7) étant constituées, au moins à leur extrémité libre, d'un matériau qui est soudable sans traitement thermique, en ce que, au plus tard après avoir effectué toutes les opérations de soudage nécessitant un traitement thermique, on effectue un traitement thermique final, les tubes (3) étant tout au plus fixés à l'une des extrémités sur la plaque à tubes associée (1), et en ce que les tubes (3) insérés sont soudés indirectement sur la plaque à tubes (2), exclusivement par les extrémités libres des tronçons de tubes de prolongement (5) et des douilles (7, 7a).

2. Procédé selon la revendication 1, caractérisé en ce que les tubes (3), en vue de leur localisation dans les plaques à tubes (1, 2), sont soumis à une expansion hydraulique de manière connue en soi, une telle expansion hydraulique ayant également lieu dans la zone (E) des tronçons de tubes de prolongement (5) et des douilles (7, 7a).

**Claims**

1. A method of securing tubes (3) between tube penels (1, 2) of heat exchangers interconnected by a preferably rigid casing, the tubes (3) and/or the tube panels (1, 2) being made of steel which has to be stress-relieved by heat treatment after a welding process, characterised in that the tubes (3) are extended at at least one end by welding on a tube portion (5) made of a material weldable without heat treatment, sleeves (7) prolonging the bores (2a) for the tubes (3) are welded to the outside of at least one of the two tube panels (2) and at least at the free end are made of a material which can be welded without heat treatment, and a final heat treatment is carried out at the latest after all the welding operations requiring heat treatment have been completed, the tubes (3) being secured at one end at most to the associated tube panel (1), and the drawn-in tubes (3) are indirectly welded to the tube panel (2) exclusively via the free ends of the extension tube portions (5) and the sleeves (7, 7a).

2. A method according to claim 1, characterised in that the tubes (3) for securing in the tube panels (1, 2) are hydraulically expanded in known manner end the hydraulic expansion is also brought about in the region (E) of the extension tube portions (5) or the sleeves (7, 7a).

# Fig.1

# Fig.2